# EUROPEAN PATENT SPECIFICATION

(11) **EP 4 428 097 B1**
(45) Date of publication and mention of the grant of the patent: **06.08.2025**
(21) Application number: 23174423.6
(22) Date of filing: 22.05.2023
(51) Int. Cl.: C01B 32/00, H01M 4/36, H01M 4/587, H01M 10/0525, H01M 4/133

(54) **PREPARATION METHOD OF SOFT CARBON AND LITHIUM-ION SECONDARY BATTERY**
VERFAHREN ZUR HERSTELLUNG VON WEICHKOHLENSTOFF UND LITHIUM-IONEN-SEKUNDÄRBATTERIE
PROCÉDÉ DE PRÉPARATION DE CARBONE MOU ET BATTERIE SECONDAIRE AU LITHIUM-ION

(30) Priority: 09.03.2023 TW 112108791
(43) Date of publication of application: 11.09.2024
(73) Proprietor: CPC Corporation, Taiwan, Kaohsiung City 81126 (TW)
(72) Inventor: CHEN, Yan-Shi, Chia-Yi City, Taiwan, R.O.C. (TW)
(74) Representative: Rapisardi, Mariacristina

(56) References cited:
- EP-A1- 3 553 854
- US-A1- 2020 020 947
- US-A1- 2021 238 039
- DATABASE WPI Week 2023090, Derwent World Patents Index; AN 2023-B4835L, XP002810877

## Description

### BACKGROUND OF THE INVENTION

### 1. Field of the Invention

The present disclosure relates to a preparation method of soft carbon, and more particularly to a preparation method of soft carbon and a lithium-ion secondary battery containing the soft carbon as an anode.

### 2. Description of the Related Art

In recent years, lithium-ion secondary batteries have been widely used in various electronic products because of their high working voltage, fast charging and discharging rate, and long life. In general, a cathode material of the lithium-ion secondary battery can be selected from lithium cobalt oxide, lithium iron phosphate, ternary lithium, lithium manganate, etc., while an anode material thereof can be selected from soft carbon and the like.

Next, as far as the production method of soft carbon is concerned, it mainly includes a front-end process and a back-end process. The front-end process refers to a process of converting heavy oil into a precursor structure (such as raw coke), while the back-end process refers to a process of pre-firing and carbonizing the precursor structure, sequentially followed by grinding and grading, high-temperature carbonization, modification and carbonization, and finally obtaining a soft carbon finished product.

Patent publication number US 2021238039A1 discloses a method for making a soft carbon, comprising the steps of : a) providing a coke; and b) subjecting the coke to a carbonization process to obtain the soft carbon, the carbonization process including a preliminary calcination treatment, followed by one of a main calcination treatment, a surface-modifying calcination treatment, and the combination thereof, wherein the preliminary calcination treatment is conducted by calcining the coke at a first temperature within a range of 800° C. to 1000° C. to obtain a pre-calcinated coke. However, the inventors have found that the traditional preparation method of soft carbon still has room for improvement in further improving the characteristics of lithium-ion secondary batteries such as capacity retention ratio and fast charging cycle life.
EP 3 553 854 A1 provides a lithium ion battery and a negative electrode material thereof; UD 2020/020947 A1 discloses a negative electrode active material for a lithium secondary battery; US 2021/0238039 A1 teaches a method for making a soft carbon includes providing a coke, and subjecting the coke to a carbonization process.

### BRIEF SUMMARY OF THE INVENTION

The specific content of the preparation method of soft carbon can refer to the prior application with patent publication number TWI816598B filed by the applicant in the Republic of China. In the application, a soft carbon anode material that can improve the fast charging and discharging capability and cycle life of the battery can be provided by specific manufacturing steps.

In order to solve the disadvantageous of the prior art, an aspect of the preparation method of soft carbon of the present disclosure includes: step (A), heating heavy oil to raw coke under a condition of 480°C-550°C; step (B), heating the raw coke to 850°C-900°C at a first heating rate of 3°C/min to 5°C/min and holding the temperature for 4 hours or more to obtain a carbon-containing material; step (C), grinding and grading the carbon-containing material to obtain a carbon-containing powder, wherein a particle size distribution D₅₀ of the carbon-containing powder is 8µm-12µm, and a cumulative amount of the powder with a particle size below 5µm is 1.0% or less by weight of the overall carbon-containing powder; step (D), heating the carbon-containing powder to 1030°C-1220°C at a second heating rate of 3°C/min to 10°C/min and holding the temperature for 4 hours or more to obtain a carbon material powder; and step (E), adding pitch to the carbon material powder, and then heating it to 1030°C-1220°C at a third heating rate of 0.90°C/min to 1.25°C/min and holding the temperature for 5 hours or more to obtain soft carbon, and the amount of pitch added is 5 - 8% by weight of the carbon material powder. The soft carbon can be used to prepare a first-type lithium-ion secondary battery.

The soft carbon of this embodiment may be used to prepare a second-type lithium-ion secondary battery.

In an embodiment, step (F) is further included, carrying out smoothing before the step (C) to reduce BET specific surface area of the carbon-containing material by 20% or more; or carrying out smoothing after the step (C) to reduce BET specific surface area of the carbon-containing powder by 20% or more, wherein the smoothing is using a jet mill or repeating the Step (C) five to ten times. The soft carbon of this embodiment may be used to prepare a third-type lithium-ion secondary battery.

An aspect of the present disclosure provides a soft carbon material for an anode of a lithium-ion secondary battery. By using the aforementioned soft carbon material as the anode of the lithium-ion secondary battery, the characteristics of the lithium-ion secondary battery such as capacity retention ratio and fast charging cycle life can be improved.

### BRIEF DESCRIPTION OF THE DRAWINGS

FIG. 1 is a flowchart of a preparation method of an embodiment of the present disclosure.
FIG. 2A is a relational graph of a capacity retention ratio versus the number of charging and discharging cycles and describes a cycle life detection of a high-power type half-cell of Embodiment 1 and Comparative example 1 under a condition of 12-minute fast charging of 5C.
FIG. 2B is a relational graph of a capacity retention ratio versus the number of charging and discharging cycles and describes the cycle life detection of a high-power type half-cell of the above two under a condition of 7.5-minute fast charging of 8C.
FIG. 3A is a relational graph of a capacity retention ratio versus the number of charging and discharging cycles and describes a cycle life detection of a high-energy type half-cell of Embodiment 1 and Comparative example 1 under a condition of 12-minute fast charging of 5C.
FIG. 3B is a relational graph of a capacity retention ratio versus the number of charging and discharging cycles and describes the cycle life detection of a high-energy type half-cell of the above two under a condition of 7.5-minute fast charging of 8C.
FIG. 4A is a relational graph of a capacity retention ratio versus the number of charging and discharging cycles and describes a cycle life detection of a high-power type half-cell of Embodiment 2 and Comparative example 1 under a condition of 12-minute fast charging of 5C.
; FIG. 4B is a relational graph of a capacity retention ratio versus the number of charging and discharging cycles and describes the cycle life detection of a high-power type half-cell of the above two under a condition of 7.5-minute fast charging of 8C.
FIG. 5A is a relational graph of a capacity retention ratio versus the number of charging and discharging cycles and describes a cycle life detection of a high-power type half-cell of Embodiment 3 and Comparative example 2 under a condition of 12-minute fast charging of 5C.
FIG. 5B is a relational graph of a capacity retention ratio versus the number of charging and discharging cycles and describes the cycle life detection of a high-power type half-cell of the above two under a condition of 7.5-minute fast charging of 8C.
FIG. 6A is a relational graph of a capacity retention ratio versus the number of charging and discharging cycles and describes a cycle life detection of a high-energy type half-cell of Embodiment 4 and Comparative example 1 under a condition of 12-minute fast charging of 5C.
FIG. 6B is a relational graph of a capacity retention ratio versus the number of charging and discharging cycles and describes the cycle life detection of a high-energy type half-cell of the above two under a condition of 7.5-minute fast charging of 8C.
FIG. 7A is a relational graph of a capacity retention ratio versus the number of charging and discharging cycles and describes a cycle life detection of a high-energy type half-cell of Embodiment 5 and Embodiment 4 under a condition of 12-minute fast charging of 5C.
FIG. 7B is a relational graph of a capacity retention ratio versus the number of charging and discharging cycles and describes the cycle life detection of a high-energy type half-cell of the above two under a condition of 7.5-minute fast charging of 8C.

### DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A-B" used in the specification and the claims attached includes the meaning of "A or more and B or less". For example, the term "10-40 wt%" includes the meaning of "10 wt% or more and 40 wt% or less".

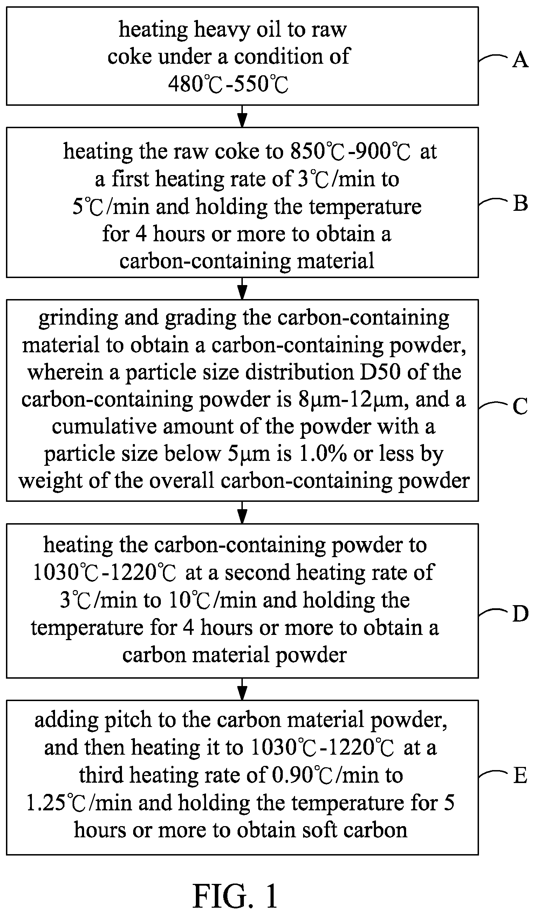

Refer to FIG. 1, which is a flowchart of the preparation method of the present disclosure.

As shown in FIG. 1, the preparation method of soft carbon of the present disclosure comprises: step (A)-step (E), and may also include step (F), which is not shown in the drawing, as appropriate. Each step is described in detail below.

### [Step (A)]

Step (A) is a step of heating heavy oil to raw coke under a condition of 480°C-550°C. Specifically, the heavy oil can be transported to a reaction tank, and under a coking temperature of 480°C-550°C and a pressure of 0.2MPa to 4MPa, the heavy oil can be heated for 1-16 hours, so that the heavy oil sets off pyrolysis and a condensation polymerization to generate the raw coke.

### [Step (B)]

Step (B) is a step of heating the raw coke obtained by Step (A) to 850°C-900°C at a first heating rate of 3°C/min to 5°C/min and holding the temperature for 4 hours or more to obtain a carbon-containing material. By Step (B), the raw coke can carry out at least one of a condensation polymerization, dehydrogenation reaction, and pyrolysis reaction, so that the raw coke begins to form a carbon-containing material with sp² hybrid orbitals.

### [Step (C)]

Step (C) is a step of grinding the carbon-containing material obtained by Step (B) to obtain a carbon-containing powder; wherein a particle size distribution D₅₀ of the carbon-containing powder is 8µm-12µm, and a cumulative amount of the powder with a particle size below 5µm is 1.0% or less by weight of the overall carbon-containing powder. In addition, the grinding of Step (C) can use a high-pressure air grinder, a collision plate grinder, or an impact grinder, etc., and the grading of Step (C) can use a cyclone grader or a vibration grader, etc., without special restrictions.

The first technical feature of the present disclosure compared with the prior art is that: by step (C), the proportion of fine powder (powder with a median particle size of 5µm or less) in the carbon-containing powder is reduced, so that it can reduce the weight of a solid electrolyte interface (SEI) formed on a surface of an anode when the soft carbon material of the present disclosure is used to subsequently manufacture the anode of the lithium-ion secondary battery, thereby improving capacity retention ratio and fast charging cycle life of a lithium-ion secondary battery.

### [Step (D)]

Step (D) is a step of heating the carbon-containing powder obtained by Step (C) to 1030°C-1220°C at a second heating rate of 3°C/min to 10°C/min and holding the temperature for 4 hours or more to obtain a carbon material powder. By Step (D), the residual raw coke in the carbon-containing powder can carry out at least one of a condensation polymerization, dehydrogenation reaction and pyrolysis reaction, so that carbon of the residual raw coke can be rearranged into sp² hybrid orbitals to become a carbon material powder.

### [Step (E)]

Step (E) is a step of adding pitch to the carbon material powder obtained by Step (D), and then heating it to 1030°C-1220°C at a third heating rate of 0.90°C/min to 1.25°C/min and holding the temperature for 5 hours or more to obtain soft carbon. By Step (E), a feature of the softening point of the pitch is used, so that the viscosity of the pitch in the carbon material powder added with the pitch can be reduced because of the temperature reaching the softening point of the pitch during the heating process of Step (E), and the pitch after the viscosity reduction can modify the tiny holes on a surface of the carbon material powder, so that the specific surface area of the carbon material powder is reduced, and then the soft carbon of the present disclosure is obtained.

The second technical feature of the present disclosure compared with prior art is that: the amount of pitch added in step (E) is set to 5-8% by weight of the carbon material powder. In general, as mentioned earlier, the addition of pitch will reduce the specific surface area of the carbon material powder, which is accompanied by a decrease in the charging capacity per unit time of the lithium-ion secondary battery. However, compared with the amount of pitch added as 4% by weight, if the amount of pitch added in Step (E) is set to 5-8% by weight of the carbon material powder (especially 5% by weight), the charging capacity fails to decrease but rises, and can also improve the capacity retention ratio and fast charging cycle life of a lithium-ion secondary battery.

In addition, in Step (E), it is preferable to add the pitch with a content of 5% by weight of the carbon material powder, and increase the temperature to 1100°C at a heating rate of 1.22°C per minute and hold the temperature for at least 5 hours.

### [Step (F)]

The third technical feature of the present disclosure compared with the prior art is that: Step (F) is carrying out smoothing before the Step (C) to reduce BET specific surface area of the carbon-containing material by 20% or more; or carrying out smoothing after the Step (C) to reduce BET specific surface area of the carbon-containing powder by 20% or more.

Specifically, Step (F) can use a jet mill (for example, STJ200 made by SEISHIN) to grind the carbon-containing material or the carbon-containing powder to smooth the surface of the carbon-containing material or the carbon-containing powder and reduce the BET specific surface area by 20% or more. Further, Step (F) may also repeat the Step (C) five to ten times, by the carbon-containing material or the carbon-containing powder repeatedly colliding with the wall of the grinder and/or grader, or by allowing the carbon-containing material or the carbon-containing powder to collide with each other, so as to reduce the BET specific surface area by 20% or more, and achieve the effect of smoothing.

By Step (F), the capacity retention ratio and fast charging cycle life of a lithium-ion secondary battery can be further improved.

### [Embodiments]

Below, although the present disclosure is specifically described by various embodiments and comparative examples, the present invention is not limited to such embodiments and comparative examples.

### <Comparative example 1 and Embodiments 1-2>

According to Step (A)-Step (E) above, and based on the conditions listed in Table 1 below, soft carbons of Comparative example 1 and Embodiments 1-2 are prepared. Further, in Step (C) of Comparative example 1 and Embodiments 1-2, a high-pressure air grinder and a cyclone grader are used.

**[Table 1]**

| | | Comparative example 1 | Embodiment 1 | Embodiment 2 |
|---|---|---|---|---|
| Step (A) | Temperature (°C) | 500 | 500 | 500 |
| | Pressure (MPa) | 1.0 | 1.0 | 1.0 |
| | Time (hours) | 4 | 4 | 4 |
| Step (B) | First heating rate (°C/min) | 5 | 5 | 5 |
| | Temperature (°C) | 900 | 900 | 900 |
| | Time (hours) | 4 | 4 | 4 |
| Step (C) | D₅₀(µm) | 8-12 | 8-12 | 8-12 |
| | Cumulative amount of the powder with a particle size below 5µm | 3.04 wt% | 0.82 wt% | 3.04 wt% |
| Step (D) | Second heating rate (°C/min) | 10 | 10 | 10 |
| | Temperature (°C) | 1100 | 1100 | 1100 |
| | Time (hours) | 4 | 4 | 4 |
| Step (E) | Third heating rate (°C/min) | 1.22 | 1.22 | 1.22 |
| | Temperature (°C) | 1100 | 1100 | 1100 |
| | Time (hours) | 5 | 5 | 5 |
| | Pitch content | 4 wt% | 4 wt% | 5 wt% |

### <Comparative example 2 and Embodiment 3>

Comparative example 2 is the same as Comparative example 1 except for the use of a collision plate grinder. Embodiment 3 is the same as Embodiment 2 except for the use of a collision plate grinder. Thus, soft carbons of Comparative example 2 and Embodiment 3 are prepared.

### <Embodiments 4-5>

Embodiment 4 is the same as Comparative example 1 except that Step (F) is implemented after Step (C) (repeating Step (C) five times). Embodiment 5 is the same as Embodiment 4 except that the cumulative amount of the powder with a particle size below 5µm is reduced to 0.75% by weight. Thus, soft carbons of Embodiments 4-5 are prepared.

### <Fabrication of soft carbon anodes>

Soft carbon anodes can be made by referring to the method of patent publication number TWI816598B. First, each the above soft carbon is disintegrated by a disintegrator, and then the soft carbon anode material is obtained by sieving through a screen (for example, mesh size of 38µm). Next, 9.1g of soft carbon anode material, 0.5g of PVDF, 0.4g of conductive carbon black and 12 g to 15g of N-methylpyrrolidone (NMP) are evenly mixed to form a mixed solvent, which was coated on a copper foil with a thickness of 14µm, and dried at 85°C for 0.5 hours to remove NMP and moisture, and the soft carbon anodes of Comparative examples 1-2 and Embodiments 1-5 are formed.

Among them, the soft carbon anode includes a copper foil and a conductive film formed on the copper foil. Moreover, when a thickness of the conductive film is 20-30µm, it is a high-power type anode, which can be used as a high-power type half-cell; when the thickness of the conductive film is 50µm, it is a high-energy type anode, which can be used as a high-energy type half-cell.

### <Fabrication of half-cells>

Half-cells can be made by referring to the method of patent publication number TWI816598B. First, the anodes made by the soft carbons of Comparative examples 1-2 and Embodiments 1-5 (hereinafter referred to as the anodes of Comparative examples 1-2 and Embodiments 1-5), a lithium metal sheet as a cathode, an electrolyte, and a separator [for example, manufacturer: Celgard, material: polypropylene (PP) and polyethylene (PE)] are assembled into half-cells (hereinafter referred to as the half-cells of Comparative examples 1-2 and Embodiments 1-5). Among them, the electrolyte contains 99wt% 1M LiPF₆ solution and 1wt% vinylene carbonate. The LiPF₆ solution contains LiPF₆, ethylene carbonate (EC), methyl ethyl carbonate (EMC) and dimethyl carbonate (DMC), and the volume ratio of EC:EMC:DMC is 1:1:1.

Among them, Comparative example 1 and Embodiment 1 make a high-power type half-cell and a high-energy type half-cell; Comparative example 2 makes a high-power type half-cell; Embodiments 2-3 make high-power type half-cells; Embodiments 4-5 make high-energy type half-cells.

### <Half-cell performance detection>

A charging and discharging machine (for example, manufacturer: Arbin, model: BT2043) is used to measure the first cycle charging capacity and the first circle discharging capacity of the half-cells of Comparative examples 1-2 and Embodiments 1, 4-5; among them, the test conditions are a temperature of 25°C, a charging and discharging rate (C-rate) of 0.2C, a charging cut-off voltage of 0V, and a discharging cut-off voltage of 1.8V, and the first cycle irreversible capacity of the half-cell is calculated by the following formula. The first cycle irreversible capacity = (the first cycle charging capacity - the first cycle discharging capacity). Further, the above measurement results are summarized in Table 2 below.

### <BET specific surface area>

A BET specific surface area measuring instrument (for example, model: ASAP2020plus, brand: Micromeritics) is used to measure BET specific surface area of the soft carbons of Comparative examples 1-2 and Embodiments 1, 4-5, and the measurement results are summarized in Table 2 below.

**[Table 2]**

| | BET(m²/g) | The first cycle charging capacity (mAh/g) | The first cycle discharging capacity (mAh/g) | The first cycle irreversible capacity (mAh/g) |
|---|---|---|---|---|
| Comparative example 1 (high-power) | 2.6 | 316 | 272 | 44 |
| Comparative example 2 (high-power) | 2.6 | 320 | 269 | 51 |
| Embodiment 1 (high-energy) | 1.3 | 313 | 270 | 43 |
| Embodiment 4 | 1.5 | 318 | 272 | 46 |
| (high-energy) | | | | |
| Embodiment 5 (high-energy) | 1.0 | 315 | 274 | 41 |

### <Thermogravimetric analysis (TGA) test>

TGA tests are performed on the high-energy type half-cell of Comparative example 1 and the high-energy type half-cell of Embodiment 1. Specifically, after the half-cell of Comparative example 1 and the half-cell of Embodiment 1 have passed their respective cycle lives, 7.76mg of anode material on the half-cell electrode plate of Comparative example 1 and 10.58mg of anode material on the half-cell electrode plate of Embodiment 1 are respectively scraped for TGA testing, and the anode material is heated for one hour at an oxygen environment of 1100°C to burn carbon off. As can be seen from Table 3 below, the residual weight (i.e., the weight of SEI) of Comparative example 1 after the TGA test is 0.29mg, while the residual weight (i.e., the weight of SEI) of Embodiment 1 after the test is 0.20mg. It can be seen that by making the cumulative amount of the powder with a particle size below 5µm to be 1.0% or less by weight of the overall carbon-containing powder in Step (C), the weight of the high-impedance SEI can be reduced, thereby improving the fast charging cycle life.

**[Table 3]**

| | Weight before | Burn-off | Residual |
|---|---|---|---|
| | testing (mg) | weight (mg) | weight (mg) |
| Comparative example 1 | 7.76 | 7.47 | 0.29 |
| Embodiment 1 | 10.58 | 10.38 | 0.20 |

### <Fast charging performance detection>

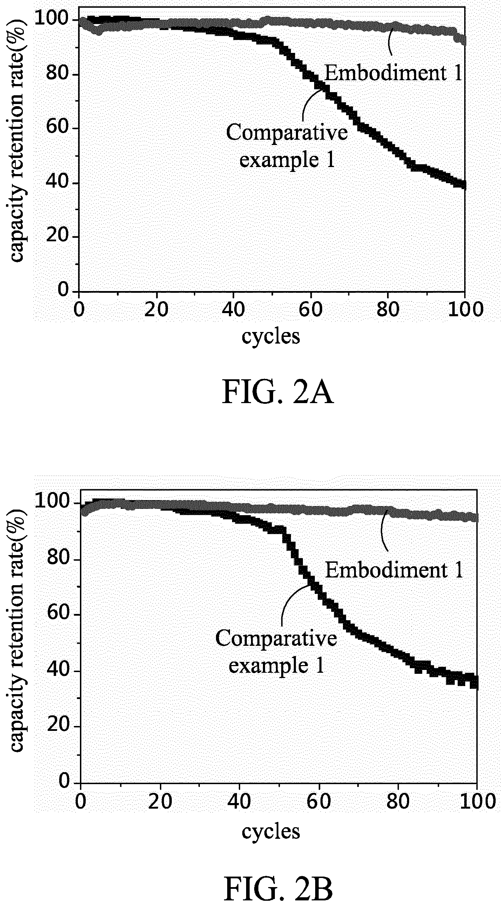

A charging and discharging machine (for example, manufacturer: Maccor, model: Series 4000) is used to measure the capacity retention ratio of the half-cells in Comparative example 1-2 and Example 1 and 4-5 respectively at a charging rate/discharging rate of 5C/5C (charging and discharging time is 12 minutes) and 8C/8C (charging and discharging time is 7.5 minutes) relative to different charging and discharging cycles. In addition, the charging rate/discharging rate of 5C/5C and the charging and discharging time of 12 minutes are referred to as "12-minute fast charging of 5C"; the charging rate/discharging rate of 8C/8C and the charging rate/discharging time of 7.5 minutes are referred to as "7.5-minute fast charging of 8C". The results of fast charging performance detection of the half-cells in the above Comparative example 1-2 and Example 1 and 4-5 are shown in FIG. 2-FIG. 7.

### <Comparison of experimental results>

### [Embodiment 1 and Comparative example 1]

Refer to FIG. 2A and FIG. 2B, as shown in FIG. 2A, under a condition of the 12-minute fast charging of 5C, when the number of charging and discharging cycles of the high-power type half-cell of Embodiment 1 (conductive film thickness on the anode is 20-30µm) is 100 cycles, the capacity retention ratio is still about 90%. In contrast, the high-power type half-cell of Comparative example 1 has a capacity retention ratio only about 40% under the same conditions. It can be seen that the capacity retention ratio of the high-power type half-cell of Example 1 is increased by about 50% compared with the high-power type half-cell of Comparative example 1.

Also, as shown in FIG. 2A, if the capacity retention ratio is maintained at 80% or more as a benchmark for fast charging cycle life, when the number of charging and discharging cycles of Comparative example 1 is about 60 cycles, the capacity retention ratio drops to 80% or less. In contrast, when the number of charging and discharging cycles of Embodiment 1 is 100 cycles, the capacity retention ratio still maintains at 80% or more. In other words, compared to Comparative example 1, the fast charging cycle life of Embodiment 1 is increased by 60% or more (100/60 = an increase of 67%).

Then, as shown in FIG. 2B, under a condition of the 7.5-minute fast charging of 8C, when the number of charging and discharging cycles of the high-power type half-cell of Embodiment 1 is 100 cycles, the capacity retention ratio is still about 90% In contrast, the high-power type half-cell of Comparative example 1 has a capacity retention ratio only about 40% under the same conditions. It can be seen that the capacity retention ratio of the high-power type half-cell of Example 1 is increased by about 50% compared with the high-power type half-cell of Comparative example 1.

It can be seen that whether under the condition of 12-minute fast charging of 5C or 7.5-minute fast charging of 8C, by the technical feature of the present disclosure of "by Step (C), the proportion of powder with D₅₀ below 5µm in the carbon-containing powder is reduced to 1% or less by weight of the overall carbon-containing powder", the capacity retention ratio and fast charging cycle life of the lithium-ion secondary battery can be improved.

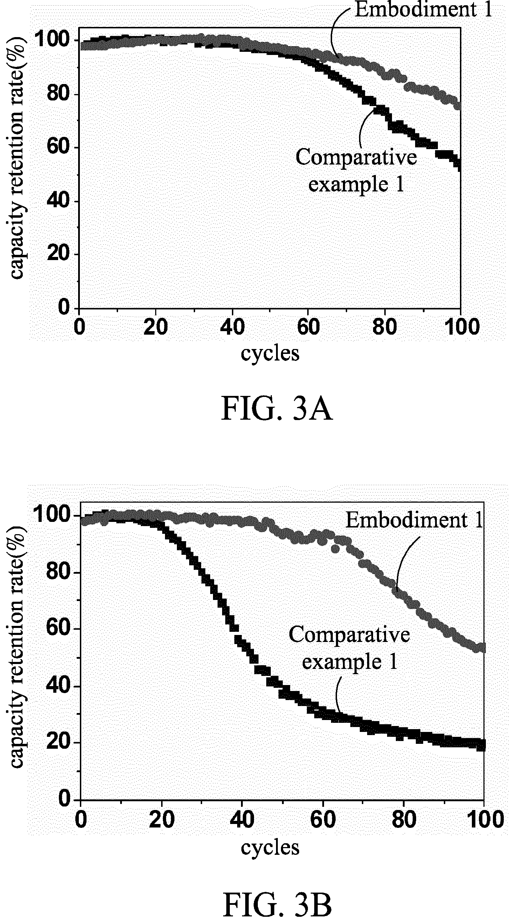

Further, referring to FIG. 3A and FIG. 3B, even if the soft carbon of the present disclosure is applied to a high-energy type half-cell (the thickness of the conductive film on the anode is 50µm), by the same comparison method as FIG. 2A and FIG. 2B, it can be observed from FIGS. 3A and 3B:
1. Under the condition of 12-minute fast charging of 5C, compared with Comparative example 1, Embodiment 1 has the capacity retention ratio to be increased by 20% or more, and the fast charging cycle life to be increased by about 20% under 100 cycles of charging and discharging cycles.
2. Under the condition of 7.5-minute fast charging of 8C, compared with Comparative example 1, Embodiment 1 has the capacity retention ratio to be increased by 30% or more, and the fast charging cycle life to be increased by about 100% under 100 cycles of charging and discharging cycles.

In addition, the first cycle irreversible capacity of the high-energy type half-cell in Embodiment 1 is 43mAh/g, which is still within the acceptable range (40-45mAh/g). Further, from the results of FIGS. 2A-FIG. 3B, it can be seen that the soft carbon of the present disclosure has the effect of improving the capacity retention ratio and fast charging cycle life when applied to various types of half-cells, that is, Embodiment 1 can achieve the effect of improving the capacity retention ratio and fast charging cycle life at maintaining other characteristics (such as making the first cycle irreversible capacity in the range of 40-45mAh/g).

### [Embodiment 2 and Comparative example 1]

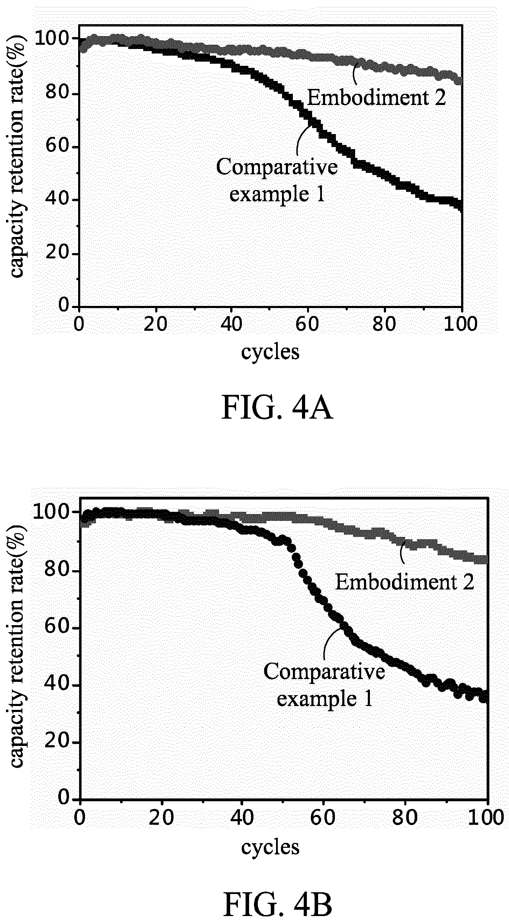

First, the difference between Embodiment 2 and Comparative example 1 is that the amount of pitch added in Step (E) is increased from 4% by weight of the carbon material powder to 5% by weight of the carbon material powder (second technical feature of the present disclosure). Next, referring to FIG. 4A and FIG. 4B, by the same comparison method as FIG. 2A-FIG. 2B, it can be observed from FIGS. 4A and 4B:
1. Under the condition of 12-minute fast charging of 5C, compared with Comparative example 1, Embodiment 2 has the capacity retention ratio to be increased by 40% or more, and the fast charging cycle life to be increased by about 80% under 100 cycles of charging and discharging cycles.
2. Under the condition of 7.5-minute fast charging of 8C, compared with Comparative example 1, Embodiment 2 has the capacity retention ratio to be increased by 40% or more, and the fast charging cycle life to be increased by about 80% under 100 cycles of charging and discharging cycles.

In addition, the charging capacity per unit time of Comparative example 1 are respectively 59% (5C fast charging) and 50% (8C fast charging), and the charging capacity per unit time of Embodiment 2 are 60% (5C fast charging) and 50% (8C fast charging). It can be seen that by virtue of the technical feature of the present disclosure, the capacity retention ratio and fast charging cycle life of the lithium-ion secondary battery can be further improved under the condition that the charging capacity fails to decrease but rises.

### [Embodiment 3 and Comparative example 2]

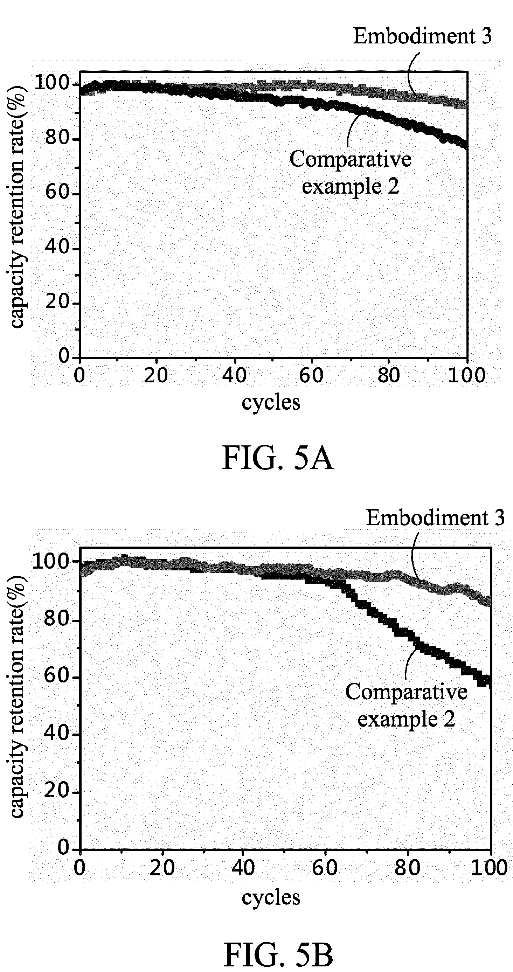

Embodiment 3 and Comparative example 2 are intended to show that the method of the present disclosure (e.g., a second technical feature) can also be applied to soft carbon materials with characteristic deviations. First, as shown in Table 2, the first cycle irreversible capacity of Comparative example 2 is 51mAh/g, which is slightly higher than the acceptable range (40-45mAh/g). Next, referring to FIG. 5A and FIG. 5B, by the same comparison method as FIG. 2A-FIG. 2B, it can be observed from FIGS. 5A and 5B:
1. Under the condition of 12-minute fast charging of 5C, compared with Comparative example 2, Embodiment 3 has the capacity retention ratio to be increased by 10% or more under 100 cycles of charging and discharging cycles.
2. Under the condition of 7.5-minute fast charging of 8C, compared with Comparative example 2, Embodiment 3 has the capacity retention ratio to be increased by 20% or more under 100 cycles of charging and discharging cycles.

In addition, the charging capacity per unit time of Comparative example 2 are 62% (5C fast charging) and 58% (8C fast charging), and the charging capacity per unit time of Embodiment 3 are 65% (5C fast charging) and 62% (8C fast charging). It can be seen that even if the characteristics of the soft carbon material deviate, the capacity retention ratio of the lithium-ion secondary battery can be improved by the present disclosure.

### [Embodiment 4 and Comparative example 1]

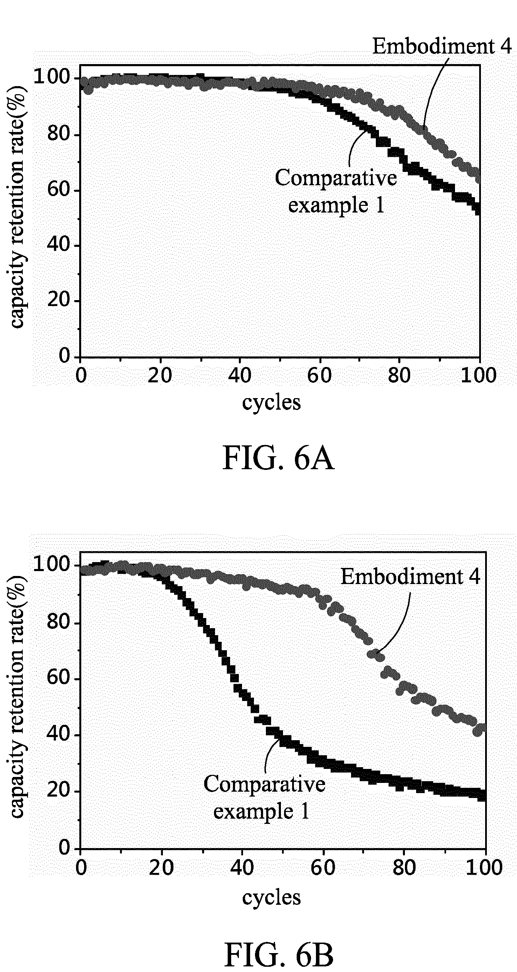

First, the difference between Embodiment 4 and Comparative example 1 is that smoothing of Step (F) is further carried out (technical feature of the present disclosure). Further, as shown in Table 2, the BET specific surface area in Comparative example 1 is 2.3m²/g, and the BET specific surface area in Embodiment 4 is 1.5m²/g, that is, the specific surface area of Comparative example 1 is reduced by about 30% by smoothing. Next, referring to FIG. 6A and FIG. 6B, by the same comparison method as FIG. 2A-FIG. 2B, it can be observed from FIGS. 6A and 6B:
1. Under the condition of 12-minute fast charging of 5C, compared with Comparative example 1, Embodiment 4 has the capacity retention ratio to be increased by 10% or more, and the fast charging cycle life to be also increased by 10% or more under 100 cycles of charging and discharging cycles.
2. Under the condition of 7.5-minute fast charging of 8C, compared with Comparative example 1, Embodiment 4 has the capacity retention ratio to be increased by 20% or more, and the fast charging cycle life to be also increased by 100% under 100 cycles of charging and discharging cycles.

It can be seen that by the technical feature of the present disclosure, the capacity retention ratio and fast charging cycle life of the lithium-ion secondary battery can also be further improved.

### [Embodiment 5 and Embodiment 4]

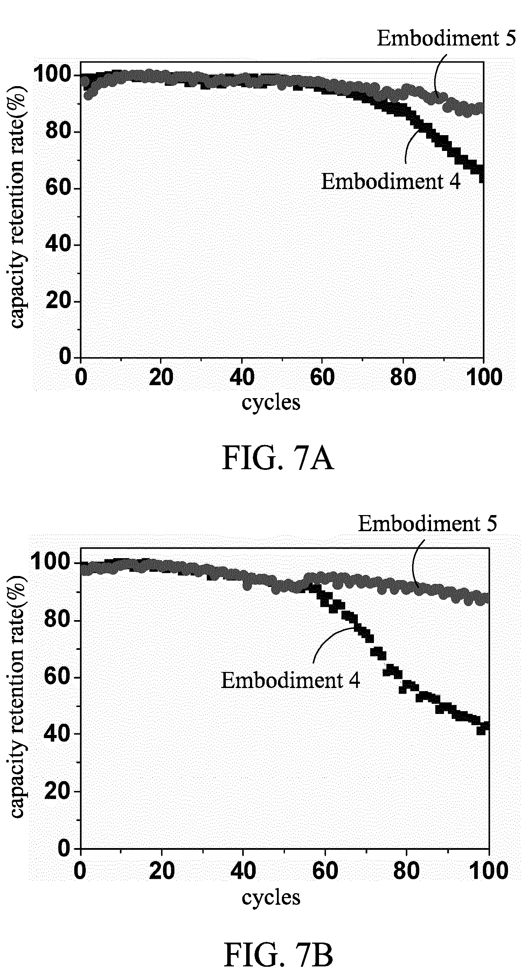

First, the difference between Embodiment 5 and Embodiment 4 is that Embodiment 5 is based on Embodiment 4, further reducing the cumulative amount of the powder with a particle size below 5µm to 0.75% by weight (the technical feature of the present disclosure). That is, Embodiment 5 simultaneously implements the technical features of the present disclosure, while Embodiment 4 only implements a technical feature of the present disclosure. Next, referring to FIG. 7A-FIG. 7B, by the same comparison method as FIG. 2A-FIG. 2B, it can be observed from FIGS. 7A and 7B:
1. Under the condition of 12-minute fast charging of 5C, compared with Embodiment 4, Embodiment 5 has the capacity retention ratio to be increased by 25% or more under 100 cycles of charging and discharging cycles.
2. Under the condition of 7.5-minute fast charging of 8C, compared with Embodiment 4, Embodiment 5 has the capacity retention ratio to be increased by 45% or more under 100 cycles of charging and discharging cycles.

Herein, as described in the section of the preceding FIG. 3A-FIG. 3B, in the portion of a high-energy type half-cell, by virtue of the technical feature of the present disclosure, under the condition of 12-minute fast charging of 5C, compared with Comparative example 1, Embodiment 1 has the capacity retention ratio to be increased by 20% or more. Under the condition of 7.5-minute fast charging of 8C, compared with Comparative example 1, Embodiment 1 has the capacity retention ratio to be increased by 30% or more. It can be seen that the improvement effect of capacity retention ratio of Embodiment 1 compared with Comparative example 1 under two fast charging conditions is close to the improvement effect of capacity retention ratio of Embodiment 5 compared to Embodiment 4 under two fast charging conditions.

In other words, even if one of the technical features of the present disclosure (Embodiment 4) is applied, another technical feature (Embodiment 5) is further applied, and the same improvement effect of capacity retention ratio can be obtained as "from without applying technical features of the present disclosure (Comparative example 1) to applying one of the technical features of the present disclosure (Embodiment 1)".

In summary, the present disclosure can be applied to various lithium-ion secondary batteries such as high-power type lithium batteries or high-energy type lithium batteries, and can also be applied to soft carbon materials with characteristic deviations. Further, each technical feature of the present disclosure has the effect of improving the capacity retention ratio and fast charging cycle life, and even if one of the technical features of the present disclosure is applied, another technical feature or more is further applied, a further cumulative effect of improving the capacity retention ratio can also be obtained.

By the preparation method of the present disclosure, a soft carbon material for an anode of a lithium-ion secondary battery can be provided. In addition, by using the aforementioned soft carbon material as the anode of the lithium-ion secondary battery, the characteristics of the lithium-ion secondary battery such as capacity retention ratio and fast charging cycle life can be improved.

The present invention is not limited to the above embodiments, various changes may be made within the scope indicated in the claims

## Claims

1. A preparation method of soft carbon, comprising:
step (A), heating heavy oil to raw coke under a condition of 480°C-550°C;
step (B), heating the raw coke to 850°C-900°C at a first heating rate of 3°C/min to 5°C/min and holding the temperature for 4 hours or more to obtain a carbon-containing material;
step (C), grinding and grading the carbon-containing material to obtain a carbon-containing powder, wherein a particle size distribution D₅₀ of the carbon-containing powder is 8µm-12µm, and a cumulative amount of the powder with a particle size below 5µm is 1.0% or less by weight of the overall carbon-containing powder;
step (D), heating the carbon-containing powder to 1030°C-1220°C at a second heating rate of 3°C/min to 10°C/min and holding the temperature for 4 hours or more to obtain a carbon material powder; and
step (E), adding pitch to the carbon material powder, and then heating the carbon material powder to 1030°C-1220°C at a third heating rate of 0.90°C/min to 1.25°C/min and holding the temperature for 5 hours or more to obtain soft carbon, and the amount of pitch added is 5-8% by weight of the carbon material powder.

2. The preparation method of soft carbon according to claim 1, further comprising:
step (F), carrying out smoothing before the step (C) to reduce BET specific surface area of the carbon-containing material by 20% or more; or carrying out smoothing after the step (C) to reduce BET specific surface area of the carbon-containing powder by 20% or more, wherein the smoothing is using a jet mill or repeating the Step (C) five to ten times.

3. The preparation method of soft carbon according to claim 2, further comprising:
step (F), carrying out smoothing before the step (C) to reduce BET specific surface area of the carbon-containing material by 20% or more; or carrying out smoothing after the step (C) to reduce BET specific surface area of the carbon-containing powder by 20% or more, wherein the smoothing is using a jet mill or repeating the Step (C) five to ten times.

## Patentansprüche

1. Ein Herstellungsverfahren für weichen Kohlenstoff, umfassend:
Schritt (A), Erhitzen von Schweröl zu Rohkoks unter einer Bedingung von 480 °C bis 550 °C;
Schritt (B), Erhitzen des Rohkoks auf 850 °C bis 900 °C mit einer ersten Heizrate von 3 °C/min bis 5 °C/min und Halten der Temperatur für 4 Stunden oder länger, um ein kohlenstoffhaltiges Material zu erhalten;
Schritt (C), Mahlen und Klassieren des kohlenstoffhaltigen Materials, um ein kohlenstoffhaltiges Pulver zu erhalten, wobei eine Partikelgrößenverteilung D₅₀ des kohlenstoffhaltigen Pulvers 8 µm bis 12 µm beträgt und der kumulierte Anteil des Pulvers mit einer Partikelgröße unter 5 µm 1,0 % oder weniger des Gesamtgewichts des kohlenstoffhaltigen Pulvers ausmacht;
Schritt (D), Erhitzen des kohlenstoffhaltigen Pulvers auf 1030 °C bis 1220 °C mit einer zweiten Heizrate von 3 °C/min bis 10 °C/min und Halten der Temperatur für 4 Stunden oder länger, um ein Kohlenstoffmaterialpulver zu erhalten; und
Schritt (E), Zugabe von Pech zu dem Kohlenstoffmaterialpulver und anschließendes Erhitzen des Kohlenstoffmaterialpulvers auf 1030 °C bis 1220 °C mit einer dritten Heizrate von 0,90 °C/min bis 1,25 °C/min und Halten der Temperatur für 5 Stunden oder länger, um weichen Kohlenstoff zu erhalten, wobei die zugesetzte Pechmenge 5-8 Gewichtsprozent des Kohlenstoffmaterialpulvers beträgt.

2. Das Herstellungsverfahren für weichen Kohlenstoff gemäß Anspruch 1, wobei ferner umfasst ist:
Schritt (F), Durchführung einer Glättung vor Schritt (C), um die BET-spezifische Oberfläche des kohlenstoffhaltigen Materials um 20 % oder mehr zu reduzieren; oder Durchführung einer Glättung nach Schritt (C), um die BET-spezifische Oberfläche des kohlenstoffhaltigen Pulvers um 20 % oder mehr zu reduzieren, wobei die Glättung durch den Einsatz einer Strahlmühle oder durch fünf- bis zehnmaliges Wiederholen von Schritt (C) erfolgt.

3. Das Herstellungsverfahren für weichen Kohlenstoff gemäß Anspruch 2, wobei ferner umfasst ist:
Schritt (F), Durchführung einer Glättung vor Schritt (C), um die BET-spezifische Oberfläche des kohlenstoffhaltigen Materials um 20 % oder mehr zu reduzieren; oder Durchführung einer Glättung nach Schritt (C), um die BET-spezifische Oberfläche des kohlenstoffhaltigen Pulvers um 20 % oder mehr zu reduzieren, wobei die Glättung durch den Einsatz einer Strahlmühle oder durch fünf- bis zehnmaliges Wiederholen von Schritt (C) erfolgt.

## Revendications

1. Un procédé de préparation de carbone mou, comprenant :
étape (A), chauffer de l'huile lourde pour obtenir du coke brut dans des conditions de 480 °C à 550 °C ;
étape (B), chauffer le coke brut à une température de 850 °C à 900 °C à une première vitesse de chauffe de 3 °C/min à 5 °C/min et maintenir cette température pendant 4 heures ou plus afin d'obtenir un matériau contenant du carbone ;
étape (C), broyer et classer le matériau contenant du carbone pour obtenir une poudre contenant du carbone, la distribution granulométrique D₅₀ de ladite poudre étant comprise entre 8 µm et 12 µm, et la quantité cumulée de poudre ayant une taille de particules inférieure à 5 µm représentant au maximum 1,0 % en poids de la poudre totale ;
étape (D), chauffer la poudre contenant du carbone à une température de 1030 °C à 1220 °C à une deuxième vitesse de chauffe de 3 °C/min à 10 °C/min et maintenir cette température pendant 4 heures ou plus pour obtenir une poudre de matériau carboné ; et
étape (E), ajouter du brai à la poudre de matériau carboné, puis chauffer cette poudre à une température de 1030 °C à 1220 °C à une troisième vitesse de chauffe de 0,90 °C/min à 1,25 °C/min et maintenir cette température pendant 5 heures ou plus afin d'obtenir du carbone mou, la quantité de brai ajoutée étant de 5 à 8 % en poids de la poudre de matériau carboné.

2. Le procédé de préparation de carbone mou selon la revendication 1, comprenant en outre :
l'étape (F), consistant à effectuer un lissage avant l'étape (C) afin de réduire la surface spécifique BET du matériau contenant du carbone de 20 % ou plus ; ou à effectuer un lissage après l'étape (C) afin de réduire la surface spécifique BET de la poudre contenant du carbone de 20 % ou plus, ledit lissage étant réalisé au moyen d'un broyeur à jet ou en répétant l'étape (C) de cinq à dix fois.

3. Le procédé de préparation de carbone mou selon la revendication 2, comprenant en outre :
l'étape (F), consistant à effectuer un lissage avant l'étape (C) afin de réduire la surface spécifique BET du matériau contenant du carbone de 20 % ou plus ; ou à effectuer un lissage après l'étape (C) afin de réduire la surface spécifique BET de la poudre contenant du carbone de 20 % ou plus, ledit lissage étant réalisé au moyen d'un broyeur à jet ou en répétant l'étape (C) de cinq à dix fois.
